# EUROPÄISCHE PATENTSCHRIFT

(11) **EP 2 243 728 B1**
(45) Veröffentlichungstag und Bekanntmachung des Hinweises auf die Patenterteilung: **11.12.2013**
(21) Anmeldenummer: 10003884.3
(22) Anmeldetag: 13.04.2010
(51) Int. Cl.: B65G 13/071, B65G 21/14, B65G 15/26, B65G 47/66

(54) **Förderer zum Transportieren von Gegenständen**
Transporter for transporting objects
Transporteur destiné au transport d'objets

(30) Priorität: 22.04.2009 DE 102009018163
(43) Veröffentlichungstag der Anmeldung: 27.10.2010
(73) Patentinhaber: Gawronski GmbH Industrievertretungen, 73765 Neuhausen (DE)
(72) Erfinder: Gawronski, Seweryn, 73765 Neuhausen (DE)
(74) Vertreter: Goy, Wolfgang

(56) Entgegenhaltungen:
- WO-A1-01/49595
- DE-U1-202006 015 281
- FR-A1- 2 911 332
- JP-A- 2002 087 557
- JP-U- 58 161 916
- US-A- 2 760 617
- US-A1- 2008 035 453

## Beschreibung

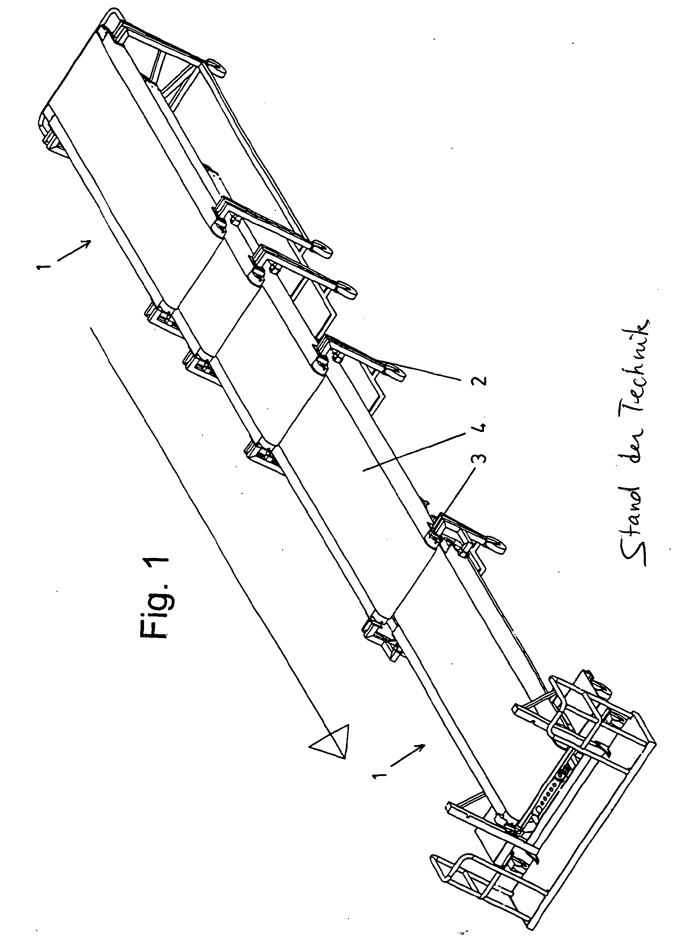

Die Erfindung betrifft einen Förderer zum Transportieren von Gegenständen nach dem Oberbegriff des Anspruchs 1. Ein solcher Förderer ist in Fig. 1 dargestellt.

Förderbänder zum Transportieren von Gegenständen sind in vielfältigen Ausführungsformen bekannt. Das Grundprinzip besteht darin, daß um zwei endseitige Trommeln ein Gurt endlos umläuft. Die Trommeln sind dabei auf einem Gestell drehbar gelagert. Die eine Trommel dient als Antriebstrommel.

Es ist bekannt, mehrere Förderbänder zu einem Gesamtförderer zusammenzustellen. Das Grundprinzip besteht dabei darin, daß die einzelnen Förderbänder des Förderers im Nichtgebrauchszustand in ihrer Längserstreckung zusammengeschoben sind. Für den Gebrauchszustand werden die Förderbänder teilweise oder vollständig, teleskopartig in Längsrichtung der Förderbänder auseinandergefahren. Die Enden benachbarter Förderbänder liegen dabei etagenartig übereinander.

US 2008/0035453 A1 offenbart einen teleskopischen Förderer zum Transportieren von Gegenständen. Dieser Förderer besteht aus Rollenbahnen oder Förderbändern.

Das Problem bei diesen Teleskopförderern besteht darin, daß sie in der Regel nur in eine Richtung transportieren können, nämlich in der Richtung, bei welcher die zu transportierenden Gegenstände von der oberen Etage des Förderbandes auf die darunterliegende Etage des benachbarten, nächsten Förderbandes übergeben werden. Eine umgekehrte Laufrichtung ist in der Regel nicht möglich, da die Gegenstände, insbesondere relativ kleine Gegenstände die Höhe zwischen zwei benachbarten Etagen nicht überwinden können.

Davon ausgehend liegt der Erfindung die **Aufgabe** zugrunde, bei einem Förderer zum Transportieren von Gegenständen der eingangs angegebenen Art eine Möglichkeit zu schaffen, daß der Förderer in beide Laufrichtungen gleichermaßen einsetzbar ist.

Die technische **Lösung** ist gekennzeichnet durch die Merkmale im Kennzeichen des Anspruchs 1.

Dadurch ist ein Universalteleskopförderer geschaffen, mittels welchem in beide Laufrichtungen Gegenstände transportiert werden können. Mit ein und demselben Teleskopförderer kann ohne Drehung des Förderers um 180° sowohl eine Be- als auch eine Entladung von Containern, Lastkraftwagen etc. durchgeführt werden. Die Grundidee der Erfindung besteht darin, daß die zu überbrückende Gesamthöhe des etagenartigen Überganges von einem Förderband zum benachbarten Förderband in Transportrichtung gesehen abgeflacht ist. Dies bedeutet, daß der zu transportierende Gegenstand nicht die maximale Überbrückungshöhe zwischen der unteren Etage und der oberen Etage als Ganzes vor sich hat, sondern daß er lediglich eine Schräge allmählich überwinden muß.

Nach der Erfindung ist das Ende des um eine Trommel umlaufenden Förderbandes über eine gewisse Strecke schräg nach unten in einem spitzen Winkel abgeflacht. Dies bedeutet, daß - in Transportrichtung gesehen - durch diese allmähliche Schräge bis hin zur maximalen Höhe des oberen Förderbandes bezüglich zum unteren Förderband diese maximale Höhe allmählich erreicht wird. Die Schräge gestattet somit einen problemlosen Transport des Gegenstandes von der unteren Etage auf die darüber befindliche obere Etage des benachbarten Förderbandes. Auch ist diese Weiterbildung des Förderbandes als solches technisch einfach zu realisieren, indem die endseitige Umlenktrommel einen entsprechend geringeren Durchmesser aufweist als die im Mittelbereich befindlichen Rollen.

Ausführungsbeispiele eines erfindungsgemäßen Förderers zum Transportieren von Gegenständen wird nachfolgend anhand der Zeichnungen beschrieben. In diesen zeigt:
- Fig. 1: einen gattungsgemäßen Förderer zum Transportieren von Gegenständen;
- Fig. 2: der Förderer in Fig. 1, jedoch mit einer Nachrüsteinheit;
- Fig. 3: ein Detailausschnitt aus Fig. 2;
- Fig. 4: eine Einzeldarstellung der Nachrüsteinheit;
- Fig. 5: ein Detailausschnitt aus dem Bereich des Übergangs von einem Förderband zum anderen Förderband mit der Nachrüsteinheit;
- Fig. 6: eine alternative Ausführungsform des Förderers mit einer Zwischenleiste zur Überwölbung des Gurtes;
- Fig. 7: einen erfindungsgemäßen Förderer zum Transportieren von Gegenständen mit abgeschrägtem Förderband.

Die Ausführungsformen der Figuren 1 bis 6 sind nicht Teil der Erfindung.

Der Förderer in seiner Ausgangskonstellation ist in Fig. 1 dargestellt. Es handelt sich dabei um einen sogenannten Teleskopförderer, bei welchem die Förderbänder 1 hintereinander angeordnet sind. Jedes dieser Förderbänder 1 weist ein auf dem Boden verfahrbares Gestell 2 auf sowie einen um endseitige Trommeln 3 endlos umlaufenden Gurt 4. Eine der beiden Trommeln 3 wird dabei angetrieben.

Für den Nichtgebrauchszustand sind dabei die Förderbänder 1 teleskopartig ineinandergeschoben, wie dies in der Darstellung in Fig. 1 rechts oben andeutungsweise erkennbar ist. Für den Gebrauchszustand des Förderers können die Förderbänder 1 teleskopartig auseinandergezogen werden, wie dies in Fig. 1 links unten erkennbar ist.

Der Förderer, wie er in Fig. 1 dargestellt ist, besitzt eine Laufrichtung, wie sie durch den Pfeil angedeutet ist. Dies bedeutet, daß die Gegenstände, welche auf das Förderband 1 rechts oben aufgelegt werden, kaskadenartig nach unten von Förderband 1 zu Förderband 1 transportiert werden. Ein Problem entsteht, wenn der Gegenstand in der umgekehrten Laufrichtung transportiert werden muß. Zu diesem Zweck muß der Gegenstand die Etagenhöhe zwischen zwei benachbarten Förderbändern 1 überwinden.

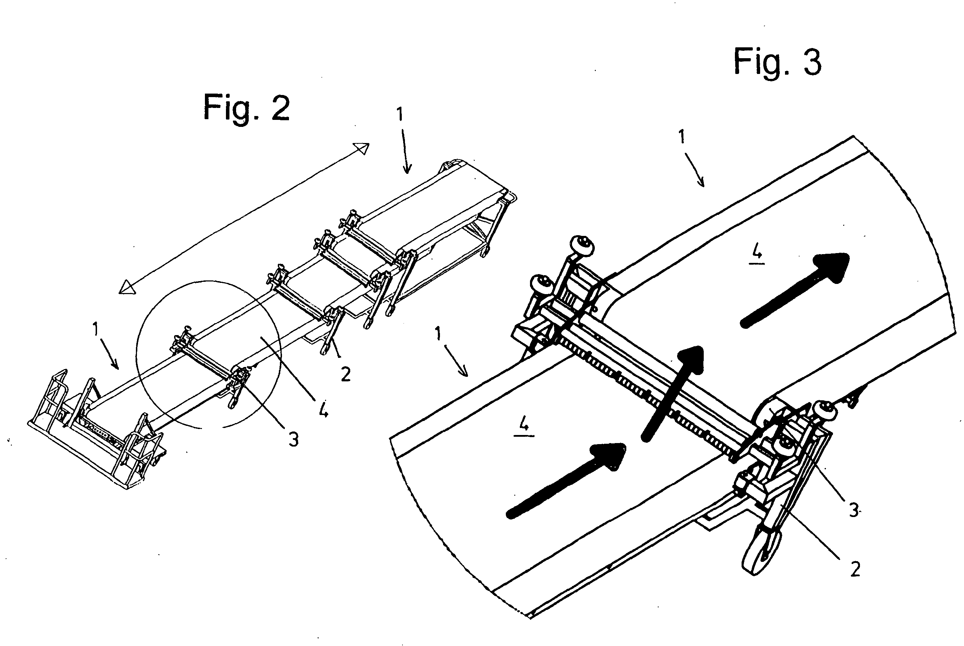

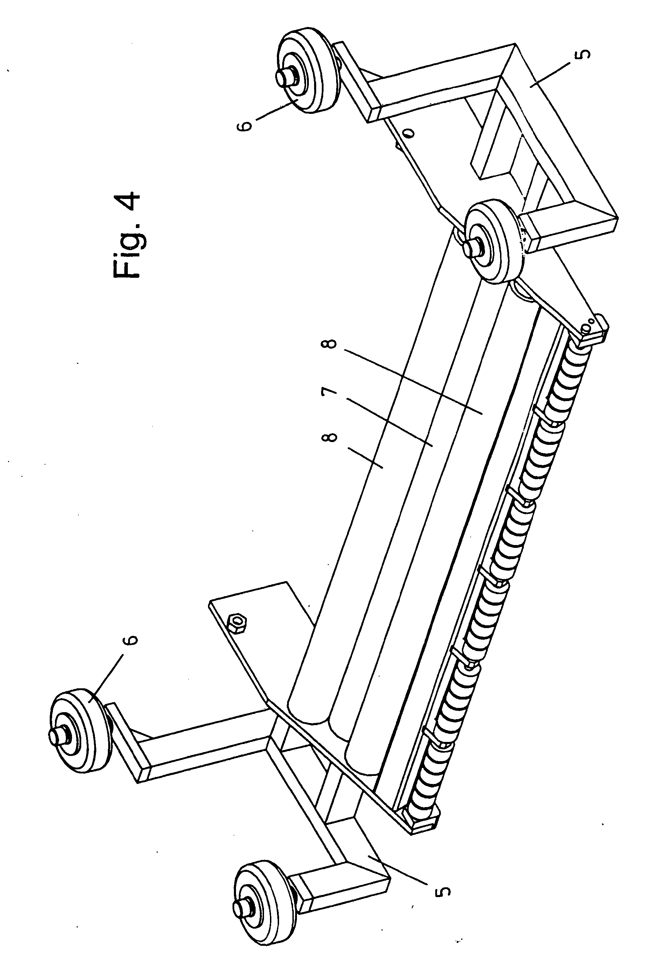

Um dennoch diese umgekehrte Laufrichtung des Förderers einsetzen zu können, kann eine separate Einrichtung vorgesehen sein, welche im Bereich des Etagenübergangs zwischen zwei benachbarten Förderbändern 1 anbringbar ist. Diese Einrichtung ist in Fig. 4 separat und in den Fig. 2, 3 sowie 5 im Einsatz dargestellt.

Diese Zusatzeinrichtung besitzt ein eigenes Gestell 5. Dieses weist seitliche Führungen 6 auf. Weiterhin sind eine Antriebsrolle 7 sowie zwei Rollen 8 vorgesehen. Diese können jeweils mit einer reibungserhöhenden Beschichtung 9 versehen sein.

### Die Funktionsweise ist wie folgt:

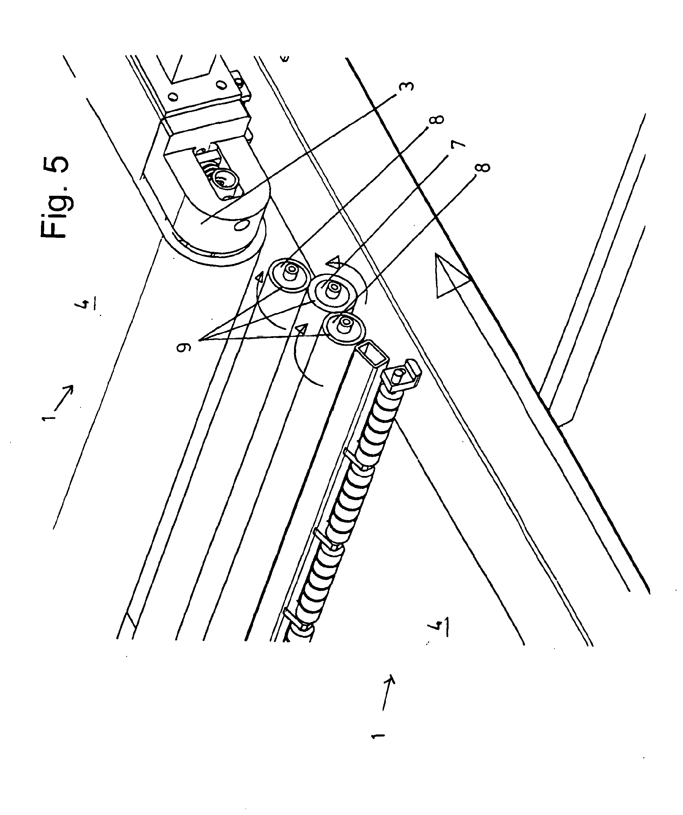

Das Gestell 5 wird im Übergangsbereich zwischen zwei benachbarten Förderbändern 1 angeordnet und hat den Zweck, die Gesamthöhe zwischen den beiden Etagen durch die Rollen 8 in Teilhöhen zu überwinden, so daß gewissermaßen eine Schräge zwischen den beiden Etagen ausgebildet ist. Zu diesem Zweck liegt die Antriebswelle 7 auf dem Gurt 4 des Förderbandes 1 auf. Durch die Vorwärtsbewegung des Förderbands 1 (in Fig. 5 durch den Pfeil angedeutet), wird die frei drehbare Antriebsrolle 7 in eine Drehbewegung versetzt. Da die beiden Rollen 8 mit dieser Antriebsrolle 7 in Reibkontakt stehen, werden sie gleichermaßen in eine Drehbewegung versetzt, und zwar in umgekehrter Drehrichtung. Diese umgekehrte Drehrichtung entspricht jedoch der Transportrichtung des Förderbandes 1.

Dies bedeutet, daß der zu transportierende Gegenstand von dem etagenmäßig unteren Förderband 1 in den Wirkungsbereich der Rollen 8 geschoben wird. Da diese angetrieben sind, sorgen diese für den weiteren Transport des Gegenstandes im Bereich des Übergangs zwischen diesen beiden Etagen, und zwar bis der Gegenstand das Förderband 1 der oberen Etage erreicht hat.

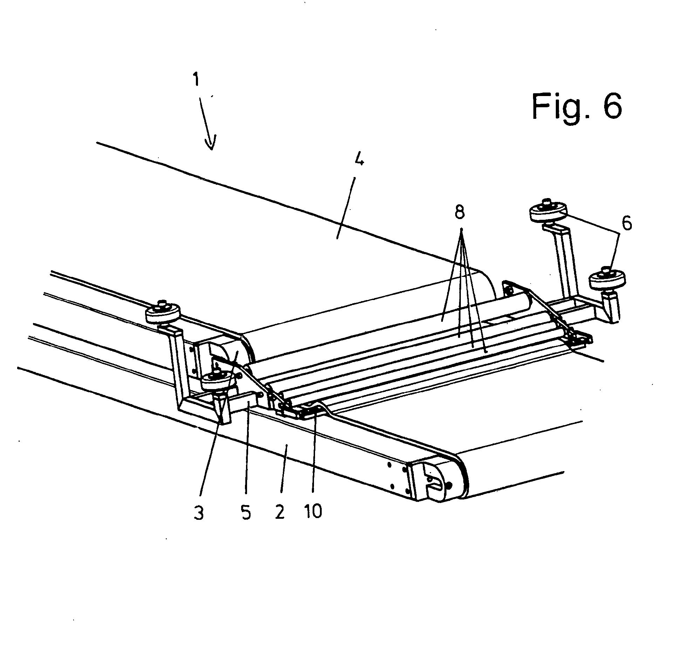

Eine alternative Weiterentwicklung ist in Fig. 6 dargestellt. Die Weiterentwicklung besteht darin, daß in Transportrichtung des Gurtes 4 gesehen vor der ersten Rolle 8 zwischen dem Gurt 4 und der darunter befindlichen Auflagefläche für diesen Gurt 4 eine Querleiste 10 angeordnet ist. Diese Querleiste 10 bewirkt, daß der Gurt 4 eine Wölbung vollführt. Durch diese Wölbung wird der zu transportierende Gegenstand bereits etwas angehoben, bevor er in den Wirkungsbereich der dahinter befindlichen ersten Rolle 8 gelangt und von dort aus weitertransportiert wird.

Bei dieser Variante ist es nicht unbedingt notwendig, daß die Rollen 8 angetrieben sind, beispielsweise durch die zuvor beschriebene Antriebswelle 7. Dies gilt dann, wenn der zu transportierende Gegenstand entsprechend lang ist und mit seinem hinteren Ende auf dem Gurt 4 aufliegt und vor sich hergeschoben wird, bis er mit seinem vorderen Ende vom nächsten Gurt 4 ergriffen wird.

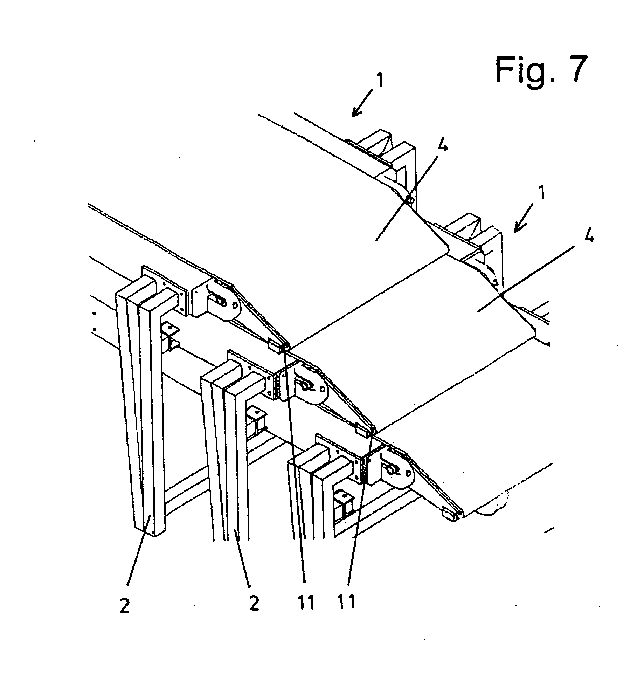

Die erfindungsgemäße Ausführungsform des Förderers zum Transportieren von Gegenständen zeigt Fig. 7. Hier besteht das Grundprinzip nicht in einem separaten Gestell 5 mit querverlaufenden Rollen 8, sondern das freie Ende des Förderbandes 1, welches sich oberhalb des darunter befindlichen Förderbandes 1 befindet, ist unter einem spitzen Winkel abgeschrägt. Technisch ist dies dadurch realisiert, daß die endseitige Umlenktrommel 11 einen geringeren Durchmesser aufweist als die restlichen Trommeln zwischen dem Obertrum und dem Untertrum des Förderbandes 1. Durch diese abgeschrägte Ausbildung des Förderbandes 1 wird eine Art schiefe Ebene definiert, welche es ermöglicht, daß der zu transportierende Gegenstand allmählich die Gesamthöhe überwindet.

Die vorbeschriebene und in der Zeichnung dargestellte Abschrägung befindet sich dabei entweder an einem der beiden Enden der Förderbänder 1 oder aber auch alternativ an beiden Enden der Förderbänder 1. Je nachdem, wie die Förderbänder 1 entweder nur in die eine Richtung oder aber in beide Richtungen teleskopierbar sind, sind universell die unterschiedlichsten Transportrichtungen möglich.

### Bezugszeichenliste

- 1: Förderband
- 2: Gestell
- 3: Trommel
- 4: Gurt
- 5: Gestell
- 6: seitliche Führung
- 7: Antriebswelle
- 8: Rolle
- 9: Beschichtung
- 10: Querleiste
- 11: Umlenktrommel

## Patentansprüche

1. Förderer zum Transportieren von Gegenständen,
mit mehreren Förderbändern (1),
welche jeweils ein eigenes Gestell (2) und einen eigenen, und um endseitige Trommeln (3) endlos umlaufenden Gurt (4) aufweisen,
wobei die Förderbänder (1) im Nichtgebrauchszustand in ihrer Längserstreckung zusammengeschoben sind,
wobei die Förderbänder (1) im Gebrauchszustand teilweise oder vollständig, teleskopartig in Längsrichtung der Förderbänder (1) auseinandergefahren werden können und dabei die Enden benachbarter Förderbänder (1) etagenartig übereinander liegen und
wobei im Bereich des etagenartigen Übergangs von einem Förderband (1) zum benachbarten Förderband (1) in Transportrichtung gesehen die zu überwindende Gesamthöhe über eine vorgegebene Transportstrecke abgeflacht ist,
**dadurch gekennzeichnet,**
**daß** im Bereich des etagenartigen Übergangs von einem Förderband (1) zum benachbarten Förderband (1) in Transportrichtung gesehen das Obertrum des oberhalb des darunter befindlichen Förderbandes (1) liegenden oberen Förderbandes (1) zum freien Ende hin zu einem spitzen Winkel als Schräge abgeflacht ist,
wobei eine endseitige Umlenktrommel (11) an der Spitze der Schräge einen geringeren Durchmesser aufweist als die restlichen Trommeln zwischen dem Obertrum und dem Untertrum des Förderbandes (1).

## Claims

1. A transporter for transporting objects,
comprising several conveyor belts (1)
which respectively comprise a separate frame (2) and a separate belt (4) that rotates endlessly about end-lateral drums (3),
wherein the conveyor belts (1) are pushed together in their longitudinal extension in the non-use state,
wherein the conveyor belts (1) can be moved in the in-use state telescopically apart either in part or in full in the longitudinal direction of the conveyor belts, and the ends of adjacent conveyor belts (1) are situated above one another in the manner of floor-levels, and
wherein the total height to be overcome is levelled over a predetermined transport section in the region of the floor-level-like transition from one conveyor belt (1) to the adjacent conveyor belt (1) as seen in the direction of transport,
**characterized in**
**that** in the region of the floor-level-like transition from one conveyor belt (1) to the adjacent conveyor belt (1) the upper run of the upper conveyor belt (1) which is situated above the conveyor belt (1) disposed beneath said upper conveyor belt is levelled as a slope towards the free end into an acute angle as seen in the direction of transport, wherein an end-lateral tail pulley (11) at the tip of the slope has a smaller diameter than the remaining pulleys between the upper run and the bottom run of the conveyor belt (1).

## Revendications

1. Convoyeur dévolu au transport d'objets,
comprenant plusieurs bandes convoyeuses (1)
pourvues, à chaque fois, d'un bâti propre (2) et d'un tablier propre (4) qui accomplit une révolution sans fin autour de tambours d'extrémité (3),
lesdites bandes convoyeuses (1) étant regroupées les unes dans les autres suivant leur étendue longitudinale, à l'état de non-utilisation,
les bandes convoyeuses (1) pouvant être partiellement ou intégralement déployées en mode télescopique dans la direction longitudinale desdites bandes convoyeuses (1), à l'état d'utilisation, les extrémités de bandes convoyeuses (1) voisines étant alors superposées en formant des étages, et
sachant que la hauteur totale à franchir est adoucie sur un trajet de transport préétabli, en observant dans la direction du transport, dans la zone de la transition en forme d'étage entre une bande convoyeuse (1) et la bande convoyeuse (1) voisine,
**caractérisé par le fait**
**que**, dans la zone de la transition en forme d'étage entre une bande convoyeuse (1) et la bande convoyeuse (1) voisine, en observant dans la direction du transport, le brin supérieur de la bande convoyeuse (1) supérieure, située au-dessus de la bande convoyeuse (1) sous-jacente, est nivelé avec formation d'une déclivité en direction de l'extrémité libre, en décrivant un angle aigu,
sachant qu'un tambour extrême de renvoi (11) présente, au niveau de la pointe de ladite déclivité, un plus faible diamètre que les tambours restants entre le brin supérieur et le brin inférieur de la bande convoyeuse (1).
